# EUROPEAN PATENT APPLICATION

(11) **EP 4 617 326 A1**
(43) Date of publication of application: **17.09.2025**
(21) Application number: 23888527.1
(22) Date of filing: 27.10.2023
(51) Int. Cl.: C09B 57/00, C09B 67/20

(54) **DIKETOPYRROLOPYRROLE COMPOUND**

(30) Priority: 10.11.2022 JP 2022180010
(71) Applicant: DIC Corporation, Tokyo 174-8520 (JP)
(72) Inventor: FOO, Siongwan, Kamisu-shi, Ibaraki 314-0193 (JP); EBATO, Hiroshi, Tokyo 174-8520 (JP)
(74) Representative: TBK
(86) International application number: PCT/JP2023/038825
(87) International publication number: WO 2024/101179

(57) **Abstract**

Provided are a bio-derived diketopyrrolopyrrole compound that can be used as a bio-red pigment and is obtained by a safe, clean, green, and carbon-neutral approach, and a composition containing the compound. A diketopyrrolopyrrole compound containing a radioactive carbon atom ¹⁴C and having a structure represented by the following formula (A): 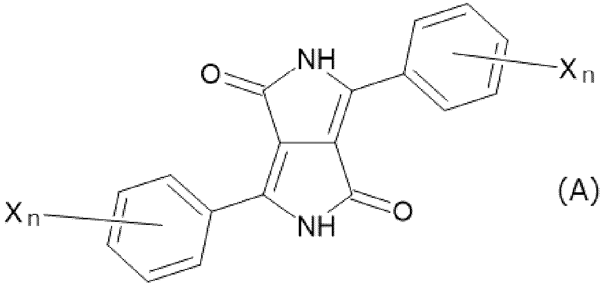 in the formula (A), X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or - CO-NR; R's each independently represent a hydrogen atom, an alkyl group, an alkenyl group, or a phenyl group; and n's each independently represent 1 or 2.

## Description

### TECHNICAL FIELD

The present invention relates to a diketopyrrolopyrrole compound, a composition containing the compound, and a method for producing the compound.

### BACKGROUND ART

Diketopyrrolopyrrole is an important red pigment in our daily life due to its strong structure and excellent light resistance and weather resistance, and thus has been widely applied to coating materials for automobile, coating materials for decoration, GI coatings, plastics, inks, and the like.

A method for producing Pigment Red 254 (PR254) (3,6-bis(4-chlorophenyl)-2,5-dihydropyrrolo[3,4-c]pyrrole-1,4-dione) having a diketopyrrolopyrrole structure has been disclosed (refer to PTL 1).

In a conventional method for synthesizing diketopyrrolopyrrole, benzene and butane derived from fossil resources are main raw materials.

By the way, in recent years, the world's tidal current has changed in a direction in which importance is attached to sustainable development. Reduction of CO₂ emissions is an important issue, and conversion from petroleum-derived raw materials to bio-raw materials is also an important issue. In addition, the replacement of toxic chemicals with less toxic alternatives has also been emphasized.

Currently produced diketopyrrolopyrrole-based red pigments are not satisfactory in consideration of the future demand for environmental problems, and it is strongly desired to provide bio-derived diketopyrrolopyrrole-based red pigments from the viewpoint of cleanness, greenness, and carbon neutrality.

### CITATION LIST

### PATENT LITERATURE

PTL 1: JP 4214493 B

### SUMMARY OF INVENTION

### TECHNICAL PROBLEM

An object of the present invention is to provide a bio-derived diketopyrrolopyrrole compound that can be used as a bio-red pigment and is obtained by a safe, clean, green, and carbon-neutral approach, and a composition containing the compound.

### SOLUTION TO PROBLEM

As a result of investigation to solve the above problems, the present inventors have found that a bio-derived diketopyrrolopyrrole compound that can be used as a red pigment can be obtained by using bio-4-aminobenzoic acid (4-aminobenzoic acid is also abbreviated as "PABA" in the description herein) and bio-succinic acid as raw materials, deriving a secondary bio-raw material or a bio-intermediate, and then subjecting the secondary bio-raw material or the bio-intermediate to a coupling reaction, a dehydration reaction, or a ring closure reaction, and have completed the invention.

That is, the invention encompasses the following aspects.
[1] A diketopyrrolopyrrole compound containing a radioactive carbon atom ¹⁴C and having a structure represented by the following formula (A): 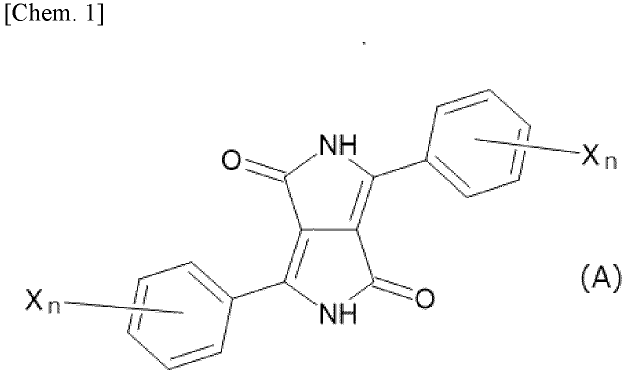 in the formula (A), X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or - CO-NR; R's each independently represent a hydrogen atom, an alkyl group, an alkenyl group, or a phenyl group; and n's each independently represent 1 or 2.
[2] The diketopyrrolopyrrole compound according to [1], in which the diketopyrrolopyrrole compound having a structure represented by the formula (A) is a diketopyrrolopyrrole compound represented by the following formula (A-1) or the following formula (A-2): 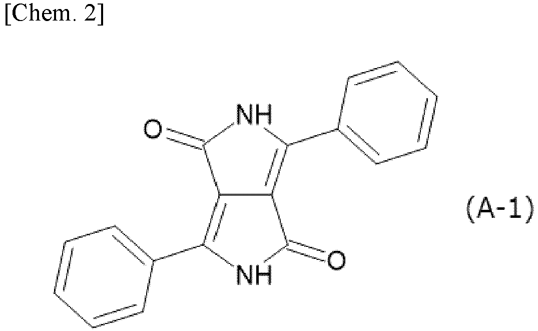 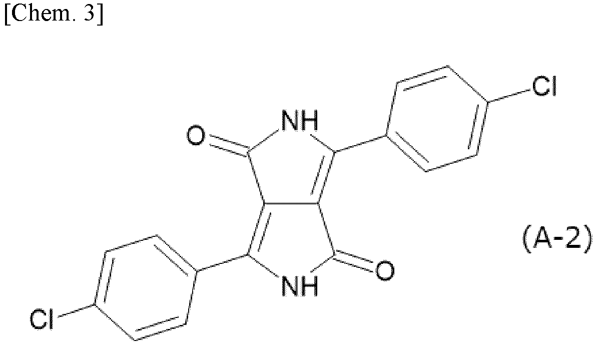
[3] A composition containing the diketopyrrolopyrrole compound according to [1] or [2].
[4] The composition according to [3], in which the composition is used as a composition for pigments.
[5] The composition according to [3] or [4], in which a proportion of the diketopyrrolopyrrole compound having the structure represented by (A) in the composition is 70% by mass or more.
[6] A coloring composition containing the composition according to [3] or [4] and a dispersion medium.
[7] The coloring composition according to [6], in which a proportion of the diketopyrrolopyrrole compound having the structure represented by (A) in the coloring composition is 0.5% by mass to 50% by mass.
[8] A method for producing a diketopyrrolopyrrole compound containing a radioactive carbon atom ¹⁴C and having a structure represented by the following formula (A): 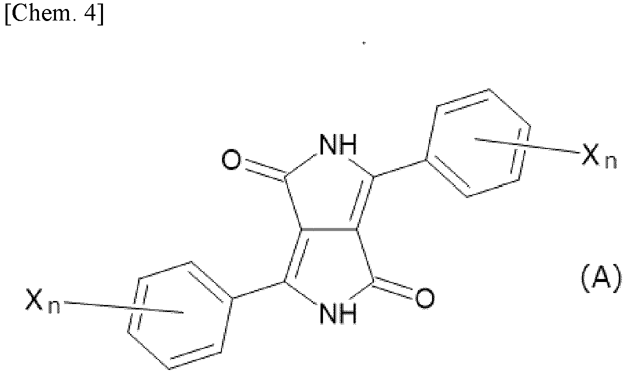 in the formula (A), X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or - CO-NR; R's each independently represent a hydrogen atom, an alkyl group, an alkenyl group, or a phenyl group; and n's each independently represent 1 or 2;
   the method including:
   (A-i) using 4-aminobenzoic acid as a raw material to produce benzonitrile which may have a substituent;
   (A-ii) using succinic acid as a raw material to produce diisopropylsuccinate, provided that at least one of the 4-aminobenzoic acid of (A-i) and the succinic acid of (A-ii) is bio-derived; and
   (A-iii) reacting the benzonitrile which may have a substituent produced in (A-i) with the diisopropyl succinate produced in (A-ii) to produce a diketopyrrolopyrrole compound having a structure represented by the formula (A).

### ADVANTAGEOUS EFFECTS OF INVENTION

According to the invention, it is possible to provide a bio-derived diketopyrrolopyrrole compound, which can be used as a bio-red pigment and is obtained by a safe, clean, green, and carbon-neutral approach, and a compositions containing the compounds.

### BRIEF DESCRIPTION OF DRAWINGS

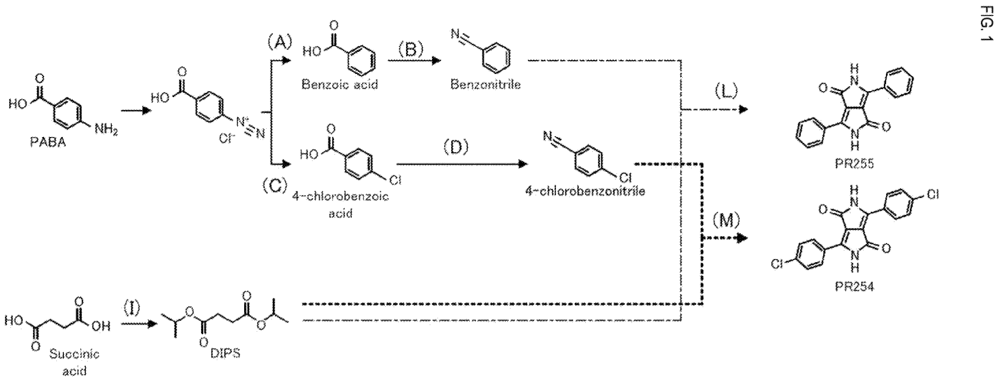

[FIG. 1] FIG. 1 is a schematic diagram for explaining a process for producing a bio-derived diketopyrrolopyrrole compound.

### DESCRIPTION OF EMBODIMENTS

Hereinafter, the present invention will be described in detail. It should be noted that the description of the constituent elements described below is an example for describing the invention, and the invention is not limited to these contents.

(Diketopyrrolopyrrole Compound Containing Radioactive Carbon Atom ¹⁴C and Having Structure Represented by Formula (A))

The diketopyrrolopyrrole compound of the invention contains a radioactive carbon atom ¹⁴C.

The diketopyrrolopyrrole compound of the invention has a structure represented by the following formula (A).

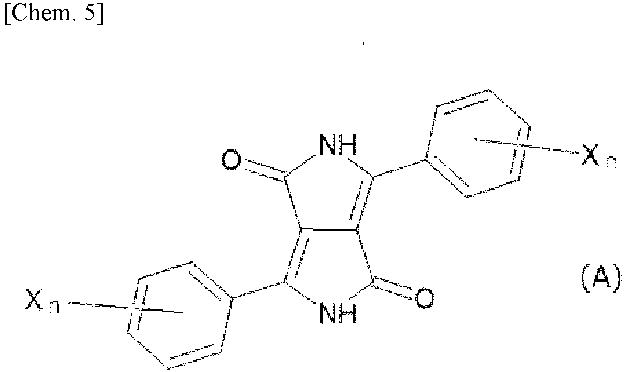

In the formula (A), X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or -CO-NR; R's each independently represent a hydrogen atom, an alkyl group, an alkenyl group, or a phenyl group; and n's each independently represent 1 or 2.

The diketopyrrolopyrrole compound of the invention can be produced by using bio-derived 4-aminobenzoic acid and bio-derived succinic acid as raw materials and reacting benzonitrile which may have a substituent and is produced using bio-derived 4-aminobenzoic acid with diisopropyl succinate produced using bio-derived succinic acid (diisopropyl succinate is also abbreviated as "DIPS" in the description herein).

The diketopyrrolopyrrole compound of the invention contains a bio (biomass) component derived from a bio raw material. The fact that the diketopyrrolopyrrole compound of the invention contains a biocomponent can be confirmed by, for example, measuring a radioactive carbon atom ¹⁴C.

For example, there is no difference in physical properties, such as molecular weight and mechanical and thermal properties, between bio-derived and petroleum-derived compounds and compositions. In order to distinguish these, a biomass degree is generally used. At this biomass degree, ¹⁴C (radioactive carbon-14, half-life: 5,730 years) is not contained in carbons of petroleum-derived compounds and compositions, and therefore, by measuring the concentration of ¹⁴C by accelerator mass spectrometry, it can be confirmed whether the produced compound or composition is a petroleum-derived compound or a bio-derived compound.

In the measurement of the biomass degree, for example, a sample to be measured is burned to generate carbon dioxide, and the carbon dioxide purified in a vacuum line is reduced with hydrogen using iron as a catalyst to generate graphite.

Then, the graphite is mounted on a ¹⁴C-AMS dedicated device (manufactured by NEC Corporation) based on a tandem accelerator, and counting of ¹⁴C, measurement of ¹³C concentration (¹³C/¹²C), and ¹⁴C concentration (¹⁴C/¹²C) were performed, and the proportion of the ¹⁴C concentration of the sample carbon to the standard modern carbon is calculated from the measured values. In the measurement, oxalic acid (HOxII) provided by the National Institute of Standards and Technology (NIST) can be used as a standard sample.

As one index for evaluating the biomass degree, for example, pMC (percent modern carbon) can be mentioned.

Here, pMC (percent modern carbon) can be calculated by measurement according to ASTM-D6866-18, and represents the proportion of the ¹⁴C concentration in an object to the ¹⁴C concentration in standard modern carbon. When the object does not contain the radioactive carbon atom ¹⁴C, pMC is 0%.

A preferred embodiment of the diketopyrrolopyrrole compound having a structure represented by the formula (A) includes, for example, a diketopyrrolopyrrole compound represented by the following formula (A-1) or the following formula (A-2).

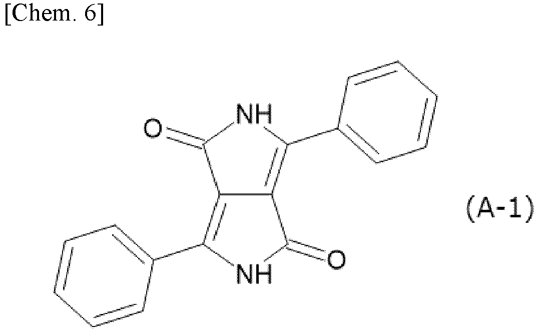

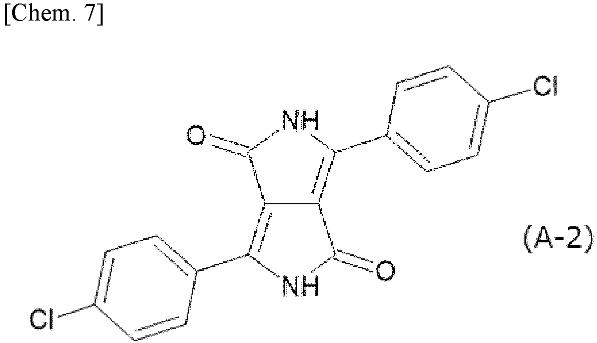

The pMC (percent modern carbon) in the diketopyrrolopyrrole compound represented by the formula (A-1) or the diketopyrrolopyrrole compound represented by the formula (A-2) is preferably 1% or more, more preferably 20% or more, more preferably 30% or more, more preferably 50% or more, more preferably 75% or more, more preferably 90% or more, and still more preferably 99% or more.

The diketopyrrolopyrrole compound represented by (A-1) is a compound known to constitute a pigment of Pigments Red 255 (PR255), and the diketopyrrolopyrrole compound represented by (A-2) is a compound known to constitute a pigment of PR254.

The diketopyrrolopyrrole compound of the invention having a structure represented by the formula (A) or a composition containing the diketopyrrolopyrrole compound is used as a diketopyrrolopyrrole-based red pigment containing a radioactive carbon atom ¹⁴C, that is, containing a biocomponent.

### (Method for Producing Diketopyrrolopyrrole Compound Having Structure Represented by Formula (A))

The diketopyrrolopyrrole compound of the invention having a structure represented by the formula (A) containing a radioactive carbon atom ¹⁴C, that is, containing a biocomponent can be obtained by:
(A-i) using 4-aminobenzoic acid as a raw material to produce benzonitrile which may have a substituent;
(A-ii) using succinic acid as a raw material to produce diisopropylsuccinate, provided that at least one of the 4-aminobenzoic acid of (A-i) and the succinic acid of (A-ii) is bio-derived; and
(A-iii) reacting the benzonitrile which may have a substituent produced in (A-i) with the diisopropyl succinate produced in (A-ii).

As the raw material 4-aminobenzoic acid or succinic acid, a bio-derived product obtained by fermentation of biomass, plant extraction, or pyrolysis of biomass can be used.

Conventional synthesis of diketopyrrolopyrroles is performed through a typical synthetic route that is synthesized from fossil-based benzene and butane, but benzene is toxic to humans and harmful to the environment. In addition, since the conventional synthesis method uses petroleum-based raw materials, it does not contribute to carbon neutral programs.

In addition, as a method of synthesizing benzonitrile other than using benzene, there is ammoxidation of toluene or the like, but heating at 400 to 450°C is required in this method. On the other hand, it is also possible to use a halogenated benzene, but in this case, since a metal cyanide is used, there is a concern that hydrogen cyanide having very high toxicity may be generated.

On the other hand, in the method for synthesizing a diketopyrrolopyrrole compound disclosed in the invention, a raw material derived from a plant can be used as a raw material, and at least one of 4-aminobenzoic acid and succinic acid of the raw materials is bio-4-aminobenzoic acid or bio-succinic acid derived from a bio-source, and thus the method contributes to a carbon-neutral approach.

In the invention, 4-aminobenzoic acid and succinic acid are used as raw materials to synthesize a diketopyrrolopyrrole compound, and synthesizing a diketopyrrolopyrrole compound using these 4-aminobenzoic acid and succinic acid as starting materials is a new approach that has not been performed in the past.

The diketopyrrolopyrrole compound containing a biocomponent of the invention, which is produced using bio-4-aminobenzoic acid or bio-succinic acid as a raw material, has a crystal structure and a particle size that are preferable for pigment formation.

A preferred embodiment of the method for producing a diketopyrrolopyrrole compound having a structure represented by the formula (A) includes a production method in which the diketopyrrolopyrrole compound is particularly a diketopyrrolopyrrole compound represented by the formula (A-1) or a diketopyrrolopyrrole compound represented by the formula (A-2).

### <Method for Producing Diketopyrrolopyrrole Compound Having Structure Represented by Formula (A-1)>

First, a method for producing the diketopyrrolopyrrole compound represented by the formula (A-1) will be described below (in the description herein, when a method for producing each compound is described, the schematic diagram of FIG. 1 is also referred to). The production method described below will be described in the case where bio-derived 4-aminobenzoic acid and bio-derived succinic acid are used as raw materials.

(A-ia) Benzoic acid is obtained using bio-derived 4-aminobenzoic acid as a raw material (the following step (A)), and then benzonitrile is produced (the following step (B)).

As a method for producing benzonitrile from 4-aminobenzoic acid, for example, the method described in Examples described later can be used.

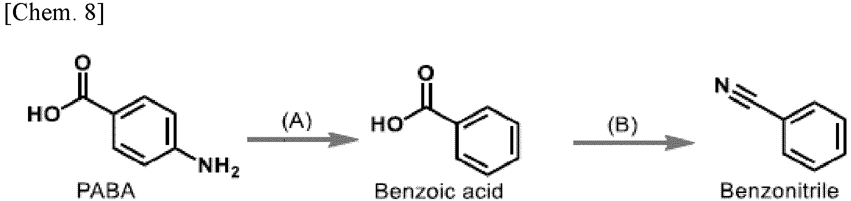

In the above step (A), benzoic acid is produced from 4-aminobenzoic acid.

Examples of the acid to be used in the step (A) include hydrochloric acid, sulfuric acid, formic acid, acetic acid, p-toluenesulfonic acid, and methanesulfonic acid. Among these, hydrochloric acid, sulfuric acid, and acetic acid are more preferable in terms of cost. Examples of the solvent that can be used include water, acetonitrile, tetrahydrofuran, dimethyl sulfoxide, N,N-dimethylformamide, toluene, xylene, and alkylbenzene. Sodium hydroxide is used to increase the dissolution rate of p-aminobenzoic acid, but the reaction is also possible without sodium hydroxide. The reaction time of diazotization is preferably 5 minutes to 4 hours, more preferably 20 minutes to 3 hours, and still more preferably 30 minutes to 2 hours. In order to exchange the azo group with a proton group in the final stage, tetrahydrofuran, acetonitrile, or N,N-dimethylformamide can be used as a proton source.

In the above step (B), benzonitrile is produced from benzoic acid.

In the step (B), examples of the supply source of ammonia include ammonia gas, ammonia water, and urea. Among these, urea is preferable from the viewpoint of ease of handling. Molybdenum is used as a catalyst to increase the reaction rate, but the reaction is possible without molybdenum. For the synthesis, a high boiling point solvent such as alkylbenzene can be used, but the reaction proceeds without a solvent. The temperature required for the first heating stage is preferably 100°C to 180°C, more preferably 130°C to 150°C, and still more preferably 120°C to 160°C. A suitable heating time is 1 to 6 hours, and preferably 2 to 4 hours. The heating temperature in the second stage is preferably 200°C to 300°C, more preferably 210°C to 280°C, and still more preferably 230°C to 250°C. The reaction time is preferably 1 to 8 hours, more preferably 2 to 6 hours, and still more preferably 3 to 5 hours.

(A-iia) Diisopropyl succinate is produced using bio-derived succinic acid as a raw material (the following step (I)).

As a method for producing diisopropylsuccinate from succinic acid, for example, the method described in Otera J., Nishikido J., Esterification: Methods, Reactions, and Applications, 2nd Edition, 25 Nov. 2009, Wiley-VCH Verlag GmbH & Co. KGaA, and the like can be used. For example, it can be produced by the method described in Examples described later.

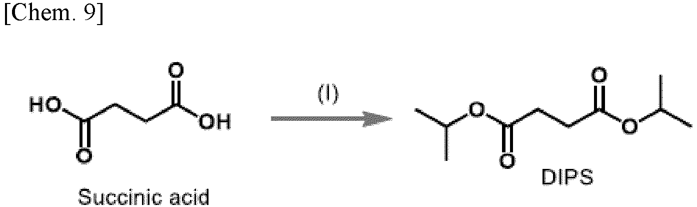

In the above step (I), diisopropyl succinate is produced from succinic acid.

Examples of the catalyst acid that can be used in the step (I) include hydrochloric acid, sulfuric acid, formic acid, acetic acid, methanesulfonic acid, and p-toluenesulfonic acid. Among these, hydrochloric acid and sulfuric acid are preferable in terms of cost.

(A-iiia) A diketopyrrolopyrrole compound represented by the formula (A-1) is produced by reacting the benzonitrile produced in the above (A-ia) with the diisopropyl succinate produced in the above (A-iia) (the following step (L)).

The reaction method of reacting benzonitrile with diisopropyl succinate is not particularly limited, and for example, the compound can be produced by utilizing a method described in Chem. Eur. J. 2021, 27, 5259 to 5267, J. Phys. Chem. C 2016, 120, 2070 to 2078, or the like. For example, it can be produced by the method described in Examples described later. 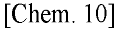 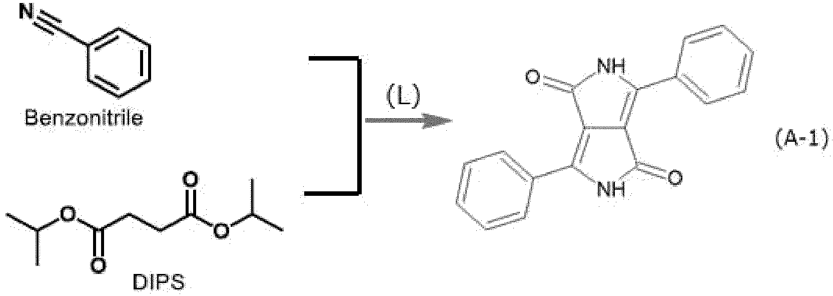 In the step (L), benzonitrile is reacted with diisopropyl succinate to produce a diketopyrrolopyrrole compound (PR255 pigment) represented by the formula (A-1).

In the step (L), examples of the alkali that can be used for deprotonation of diisopropyl succinate include sodium methoxide, potassium methoxide, sodium tert-butoxide, potassium tert-butoxide, sodium hydride, potassium hydride, lithium diisopropylamide, metallic sodium, and metallic potassium. Among these, sodium methoxide, potassium methoxide, sodium tert-butoxide, potassium tert-butoxide, sodium hydride, and potassium hydride are preferable, and potassium butoxide is more preferable, from the viewpoint of ease of handling, availability, and deprotonation ability. Examples of the solvent that can be used include methanol, ethanol, isopropyl alcohol, tert-butanol, tert-amyl alcohol, neopentyl alcohol, isopentyl alcohol, methyl isopropyl carbinol, methyl isopropyl alcohol, and dodecyl alcohol. The reaction time is preferably 5 to 24 hours, more preferably 8 to 20 hours, and still more preferably 10 to 18 hours.

### <Method for Producing Diketopyrrolopyrrole Compound Having Structure Represented by Formula (A-2)>

Next, a method for producing the diketopyrrolopyrrole compound represented by the formula (A-2) will be described below (see also the schematic diagram of FIG. 1).

(A-ib) 4-Chlorobenzoic acid is obtained using bio-derived 4-aminobenzoic acid as a raw material (the following step (C)), and then 4-chlorobenzonitrile is produced (the following step (D)).

As a method for producing 4-chlorobenzonitrile from 4-aminobenzoic acid, for example, the method described in Examples described later can be used. 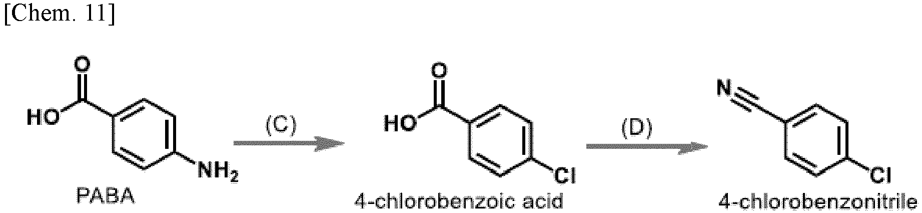 In the above step (C), a Sandmeyer reaction is used to produce 4-chlorobenzoic acid from 4-aminobenzoic acid, for example.

Examples of the acid to be used in the step (C) include hydrochloric acid, sulfuric acid, formic acid, acetic acid, p-toluenesulfonic acid, and methanesulfonic acid. Among these, hydrochloric acid, sulfuric acid, and acetic acid are preferable in terms of cost. Examples of the solvent that can be used include water, acetonitrile, tetrahydrofuran, dimethyl sulfoxide, N,N-dimethylformamide, toluene, xylene, and alkylbenzene. Sodium hydroxide is used to increase the dissolution rate of p-aminobenzoic acid, but the reaction is also possible without sodium hydroxide. The reaction time of diazotization is preferably 5 minutes to 4 hours, more preferably 20 minutes to 3 hours, and still more preferably 30 minutes to 2 hours. In order to convert the azo group to a chloro group in the final stage, examples of the chloro source include potassium chloride, lithium chloride, cuprous chloride, cupric chloride, tetraethylammonium trichloride, tetrabutylammonium trichloride, N-chlorosuccinimide, and trimethylsilyl chloride. Among these, potassium chloride, lithium chloride, cuprous chloride, cupric chloride, and N-chlorosuccinimide are preferable from the viewpoint of ease of handling.

In the above step (D), 4-chlorobenzonitrile is produced from 4-chlorobenzoic acid by the same method as described in the above step (B).

(A-iib) Diisopropyl succinate is produced using bio-derived succinic acid as a raw material (the following step (I)).

As a method for producing diisopropyl succinate from succinic acid, the same method as described in the above (A-iia) can be used. For example, it can be produced by the method described in Examples described later.

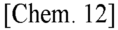

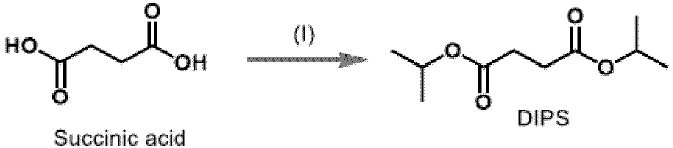

(A-iiib) A diketopyrrolopyrrole compound represented by the formula (A-2) is produced by reacting the 4-chlorobenzonitrile produced in the above (A-iib) with the diisopropyl succinate produced in the above (A-iib) (the following step (M)).

As the reaction method for reacting 4-chlorobenzonitrile with diisopropyl succinate, the same method as described in the above (A-iiia) can be used. For example, it can be produced by the method described in Examples described later. 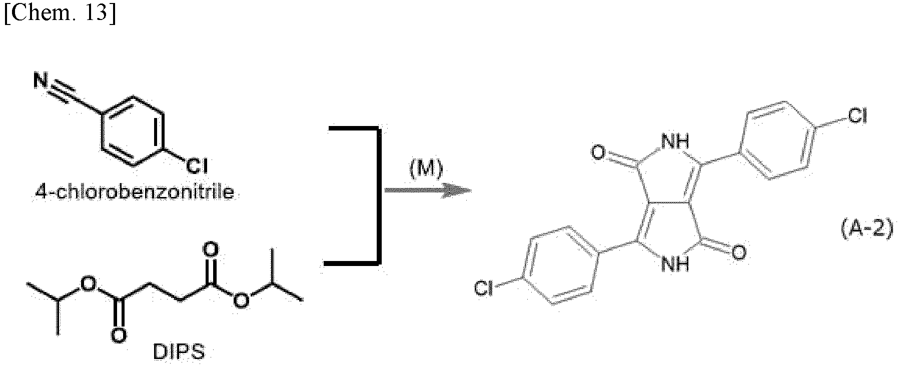 In the above step (M), a diketopyrrolopyrrole compound (PR254 pigment) represented by the formula (A-2) is produced by reacting benzonitrile and diisopropyl succinate using the same method as described above for (A-iiia).

The 4-aminobenzoic acid used as a raw material is preferably derived from biomass as described above, and the succinic acid used as a raw material is also preferably derived from biomass as described above.

It is more preferable that the 4-aminobenzoic acid and the succinic acid are both derived from biomass.

The biomass degree of the raw material used in the production method is preferably 1% or more, more preferably 50% or more, more preferably 75% or more, more preferably 90% or more, and still more preferably 99% or more. Furthermore, when a biomass raw material by a mass balance method or a book and claim method is available, it is easier to set the biomass degree to 1% or more and 100% or less. In this patent, the biomass degree including the biomass raw material by the mass balance method and the book and claim method is targeted.

### (Composition Containing Diketopyrrolopyrrole Compound)

The invention may be a composition containing the diketopyrrolopyrrole compound of the invention having a structure represented by the formula (A).

The composition is preferably used as a composition for pigments, particularly as a diketopyrrolopyrrole-based red pigment.

The composition of the invention can contain, for example, one or two or more diketopyrrolopyrrole compounds having a structure represented by the formula (A).

A more preferred embodiment of the composition of the invention is, for example, a composition containing a diketopyrrolopyrrole compound represented by the above formula (A-1) or a diketopyrrolopyrrole compound represented by the above formula (A-2).

In a case where the composition is a pigment composition, the proportion of the diketopyrrolopyrrole compound having a structure represented by the formula (A) in the composition (more preferably, the proportion of the diketopyrrolopyrrole compound represented by the formula (A-1) or the formula (A-2)) is, for example, preferably 70% by mass or more, more preferably 80% by mass or more, and still more preferably 90% by mass or more.

The BET value of the composition of the invention is preferably 20 to 100 m²/g, preferably 30 to 95 m²/g, preferably 40 to 90 m²/g, and preferably 50 to 85 m²/g. In particular, the BET value is preferably 20 to 80 for ink applications, preferably 40 to 90 for coating material applications, preferably 50 to 90 for resin applications, and preferably 50 to 100 for color filter applications. The BET value can be measured by weighing 0.1 g of a pigment in a measurement cell and setting the pigment in a specific surface area meter (Macsorb 1208).

### (Application of Diketopyrrolopyrrole Compound of the Present Invention)

The diketopyrrolopyrrole compound of the invention having a structure represented by the formula (A) obtained by the above method and containing a radioactive carbon atom ¹⁴C, and a composition containing the diketopyrrolopyrrole compound constitute a diketopyrrolopyrrole-based red pigment such as PR255 or PR254.

The diketopyrrolopyrrole compound of the invention contains carbon derived from biomass and contributes to reduction of environmental load by carbon neutrality.

The diketopyrrolopyrrole compound of the invention and a diketopyrrolopyrrole-based red pigment formed of a composition having the diketopyrrolopyrrole compound can be used as a coloring composition, a molding composition, or the like.

In addition, the diketopyrrolopyrrole compound of the invention and the diketopyrrolopyrrole-based red pigment formed of a composition having the diketopyrrolopyrrole compound are mixed with other resins, rubbers, additives, solvents, pigments, dyes, and the like as necessary, and are adjusted and used for coating materials for cosmetics, pharmaceuticals, or agricultural chemicals, printed markers, stationery, writing instruments, printing inks, inkjet inks, metallic inks, coating materials, plastic colorants, toners (color toners), color filters, and the like.

### <Coloring Composition>

The coloring composition of the invention preferably contains the diketopyrrolopyrrole compound of the invention, a diketopyrrolopyrrole-based red pigment composition consisting of a composition containing the diketopyrrolopyrrole compound, and a dispersion medium.

The coloring composition of the invention preferably contains the diketopyrrolopyrrole compound having a structure represented by the formula (A) in an amount of 0.5% by mass to 50% by mass, more preferably 2.5% by mass to 35% by mass, and still more preferably 5% by mass to 20% by mass.

### <<Dispersion Medium>>

Examples of the dispersion medium include a resin and a solvent. Examples of the resin include a resin-type dispersant and a binder resin. Examples of the solvent include water and an organic solvent. In addition, a low-molecular dispersant such as a surfactant can be used as necessary.

Examples of the type of resin in the resin-type dispersant include a styrene-(meth)acrylic acid copolymer, a (meth)acrylic acid-(meth)acrylic acid alkyl ester copolymer, a styrene-(meth)acrylic acid-(meth)acrylic acid alkyl ester copolymer, a styrene-α-methylstyrene-(meth)acrylic acid copolymer, a styrene-α-methylstyrene-(meth)acrylic acid-(meth)acrylic acid alkyl ester copolymer, poly(meth)acrylic acid, a vinylnaphthalene-(meth)acrylic acid copolymer, a styrene-maleic acid copolymer, a maleic acid-maleic anhydride copolymer, an α-olefin-(anhydrous) maleic acid copolymer, an α-olefin-(anhydrous) maleic acid-polyalkylene glycol allyl ether copolymer, a vinylnaphthalene-maleic acid copolymer, a polyester-modified (meth)acrylic acid polymer, and salts thereof.

In addition, examples of the form of the resin in the resin-type dispersant include a water-soluble resin and an emulsion (water-insoluble resin).

The binder resin may be, for example, a polyolefin resin, a polyester resin, a styrene copolymer, an acrylic resin, or a modified resin thereof. Specific examples thereof include polyolefin resins such as polyethylene including high-density polyethylene (HDPE), linear low-density polyethylene (L-LDPE) and low-density polyethylene (LDPE)), and polypropylene; polyester resins such as polyethylene terephthalate; styrene copolymers such as styrene-p-chlorostyrene copolymer, styrene-vinyltoluene copolymer, styrene-vinylnaphthalene copolymer, styrene-acrylic acid ester copolymer, styrene-methacrylic acid ester copolymer, styrene-α-chloromethyl methacrylate copolymer, styrene-acrylonitrile copolymer, styrene-vinyl methyl ether copolymer, styrene-vinyl ethyl ether copolymer, styrene-vinyl methyl ketone copolymer, styrene-butadiene copolymer, styrene-isoprene copolymer, and styrene-acrylonitrile-indene copolymer; acrylic resins such as acrylic resin and methacrylic resin; polyvinyl chloride, phenol resin, natural-modified phenol resin, natural resin-modified maleic acid resin, polyvinyl acetate, silicone resin, polyurethane resin, ethylene-vinyl acetate copolymer resin, vinyl acetate resin, nitrocellulose resin, polyamide resin, epoxy resin, xylene resin, polyvinyl butyral resin, polyvinyl acetal resin, cellulose ester resin, alkyd resin, rosin-based resin, ketone resin, cyclized rubber, chlorinated polyolefin resin, terpene resin, coumarone-indene resin, amino resin, petroleum resin, and modified resins thereof.

The organic solvent can be classified into a water-soluble solvent and a water-insoluble solvent.

Examples of the water-soluble solvent include ethanol, n-propanol, isopropanol, isobutanol, ethylene glycol, diethylene glycol, triethylene glycol, propylene glycol, and glycerin. Examples of the water-insoluble solvent include toluene, xylene, butyl acetate, methyl acetate, methyl ethyl ketone, methyl isobutyl ketone, butyl alcohol, and aliphatic hydrocarbons.

The respective materials constituting the coloring composition can be used alone or in combination of two or more kinds thereof.

### <Molding Composition>

The molding composition contains a coloring composition (pigment composition, resin). The molding composition preferably contains a thermoplastic resin as the resin. It is preferable that the molding composition containing the thermoplastic resin is melted and kneaded and molded into a desired shape to produce a molded object.

Examples of the thermoplastic resin include a homopolymer or a copolymer using ethylene, propylene, butylene, styrene, or the like as a monomer component. More specifically, examples of the thermoplastic resin include polyolefin resins such as polyethylene including high-density polyethylene (HDPE), linear low-density polyethylene (L-LDPE) and low-density polyethylene (LDPE), polypropylene, and polybutylene. Specific examples of other useful resins include polyester resins such as polyethylene terephthalate, polyamide resins such as nylon 6 and nylon 66, polystyrene resins, and thermoplastic ionomer resins. Among these, polyolefin resin and polyester resin are preferable. The number-average molecular weight of the thermoplastic resin is preferably more than 30,000 and 200,000 or less.

The molding composition can contain a wax. The wax consists of low molecular weight polyolefins. These are polymers of olefin monomers such as ethylene, propylene, and butylene, and may be block, random copolymers or terpolymers. Specific examples thereof include polymers of α-olefins such as low-density polyethylene (LDPE), high-density polyethylene (HDPE) and polypropylene (PP).

The number-average molecular weight of the wax is preferably 1,000 to 30,000, and more preferably 2,000 to 25,000. Within this range, the wax appropriately migrates to the surface of the molded object, so that the balance between the slidability and the bleed-out suppression is excellent.

The melting point of the wax is preferably 60°C to 150°C, and more preferably 70°C to 140°C. When the melting point is within this range, the processability at the time of melt-kneading the thermoplastic resin and the wax becomes good.

The molding composition can contain other additives. The other additives are materials generally used in the technical field of molded object, and examples thereof include antioxidants, light stabilizers, dispersants, metallic soaps, antistatic agents, flame retardants, lubricants, fillers, and colorants other than the diketopyrrolopyrrole compound of the invention.

The molding composition can be produced, for example, as a masterbatch containing the diketopyrrolopyrrole compound at a high concentration.

The masterbatch is preferably prepared, for example, by melt-kneading a thermoplastic resin and a pigment composition and then molding the mixture into an arbitrary shape so as to be easily used in the next step. Next, the masterbatch and a dilution resin (for example, a thermoplastic resin used in the masterbatch) are melt-kneaded, and a molded object having a desired shape can be molded. Examples of the shape of the masterbatch include a pellet shape, a powder shape, and a plate shape. In order to prevent aggregation of the pigment composition, it is preferable to produce a dispersion by melt-kneading the pigment composition and the wax in advance, and then melt-knead the dispersion together with the thermoplastic resin to produce the masterbatch. As an apparatus used for the dispersion, for example, a blend mixer, a three roll mill, or the like is preferable.

Examples of the application of the molding composition include a plastic molded object, a sheet, and a film.

### <Toner>

The toner contains a coloring composition (pigment composition, resin). The resin in the toner is called a binder resin, and is preferably a thermoplastic resin. Examples of the toner include a dry toner and a wet toner. For example, in the dry toner, the pigment composition and the binder resin are melt-kneaded, cooled, and then pulverized and classified. Next, a post-treatment step of blending and mixing additives is performed, and thus the toner can be produced.

Examples of the binder resin include styrene-p-chlorostyrene copolymer, styrene-vinyltoluene copolymer, styrene-vinylnaphthalene copolymer, styrene-(meth)acrylic acid ester copolymer, styrene-α-chloromethyl methacrylate copolymer, styrene-acrylonitrile copolymer, styrene-vinyl methyl ether copolymer, styrene-vinyl ethyl ether copolymer, styrene-vinyl methyl ketone copolymer, styrene-butadiene copolymer, styrene-isoprene copolymer, styrene-acrylonitrile-indene copolymer, polyvinyl chloride, phenol resin, natural-modified phenol resin, natural resin-modified maleic acid resin, (meth)acrylic resin, polyvinyl acetate, silicone resin, polyester resin, polyurethane, polyamide resin, furan resin, epoxy resin, xylene resin, polyvinyl butyral, terpene resin, coumarone-indene resin, and petroleum-based resin.

Among these, a polyester resin and a styrene-based copolymer are preferable, and a polyester resin is more preferable. Since the pigment composition has particularly excellent compatibility with the polyester resin, the diketopyrrolopyrrole compound is uniformly and finely dispersed in the toner, so that a high-quality toner can be obtained.

The weight-average molecular weight (Mw) of the polyester resins is preferably 5,000 or more, more preferably 10,000 to 1,000,000, and still more preferably 20,000 to 100,000. When a polyester resin having an appropriate Mw is used, a toner having good offset resistance and low-temperature fixability can be obtained.

The acid value of the polyester resin is preferably 10 to 60 mgKOH/g, and more preferably 15 to 55 mgKOH/g. When a polyester resin having an appropriate acid value is used, it is easy to suppress the release of a release agent, and a decrease in image density in a high humidity environment is less likely to occur.

The toner may further contain a charge control agent. When the charge control agent is used, a toner having a stable charge amount is easily obtained. As the charge control agent, a positive or negative charge control agent can be appropriately selected and used.

The toner can contain a release agent. Examples of the release agent include hydrocarbon-based waxes such as polypropylene wax, polyethylene wax, and Fischer-Tropsch wax, synthetic ester waxes, and natural ester-based waxes such as carnauba wax and rice wax.

If necessary, a lubricant, a fluidizing agent, an abrasive, a conductivity imparting agent, an image peeling preventing agent, and the like can be added to the toner.

Further, the toner can be used as a one component developer or a two component developer. The two component developer can further contain a carrier.

Examples of the carrier include magnetic powders such as an iron powder, a ferrite powder, and a nickel powder, and products obtained by coating the surfaces of these powders with a resin or the like. Examples of the resin with which the surface of the carrier is coated include a styrene-(meth)acrylic acid ester copolymer, a (meth)acrylic acid ester copolymer, a fluorine-containing resin, a silicone-containing resin, a polyamide resin, an ionomer resin, and a polyphenylene sulfide resin.

### <Coating Material>

The coating material contains a coloring composition (pigment composition, resin, solvent).

Examples of the resin include a thermosetting resin and a thermoplastic resin. The thermosetting resin is preferably a resin having a glass transition temperature of 10°C or higher. Examples of the type of the thermosetting resin include acrylic resin, polyester, and polyurethane. Further, the thermosetting resin preferably has a functional group capable of reacting with a curing agent. Examples of the functional group include a carboxy group and a hydroxy group. Examples of the curing agent include an isocyanate curing agent, an epoxy curing agent, an aziridine curing agent, and an amine curing agent.

The thermoplastic resin is preferably a resin having a glass transition temperature of 30°C or higher. Examples of the thermoplastic resin include nitrocellulose and polyester. The thermosetting resin and the thermoplastic resin can be used in combination.

Examples of the water-insoluble solvent among the solvents include toluene, xylene, butyl acetate, methyl acetate, methyl ethyl ketone, methyl isobutyl ketone, butyl alcohol, and aliphatic hydrocarbons.

Examples of the water-soluble solvent among the solvents include water, a monohydric alcohol, a dihydric alcohol, and glycol. Examples of the water-soluble solvent include ethanol, n-propanol, isopropanol, isobutanol, ethylene glycol, diethylene glycol, triethylene glycol, propylene glycol, and glycerin. Also included are water-dilutable monoethers derived from polyhydric alcohols. Specific examples thereof include methoxypropanol and methoxybutanol. Also included are water-dilutable glycol ethers such as, for example, butyl glycol or butyl diglycol. When the solvent contains water, the coating material is referred to as an aqueous coating material.

The coating material can further contain known additives.

Examples of the application of the coating material include a coating material for metal and a coating material for plastic.

### <Printing Ink>

The printing ink contains a coloring composition (a pigment composition, a resin, and a solvent). The printing ink is an ink other than the inkjet ink, and examples thereof include an offset printing ink, a flexographic printing ink, a gravure printing ink, a silk screen printing ink, and a color filter ink. When the solvent contains water, the ink is referred to as an aqueous printing ink.

Examples of the resin include a rosin resin, a rosin-modified phenol resin, polyurethane, nitrocellulose, an acrylic resin, a styrene-acrylic resin, and a petroleum resin.

Examples of the water-insoluble solvent among the solvents include toluene, xylene, butyl acetate, methyl acetate, methyl ethyl ketone, methyl isobutyl ketone, butyl alcohol, and aliphatic hydrocarbons.

Examples of the water-soluble solvent among the solvents include ethanol, n-propanol, isopropanol, isobutanol, ethylene glycol, diethylene glycol, triethylene glycol, propylene glycol, and glycerin. Also included are water-dilutable monoethers derived from polyhydric alcohols. Examples thereof include methoxypropanol and methoxybutanol. Also included are water-dilutable glycol ethers such as butyl glycol or butyl diglycol.

The printing ink may further contain a glittering material. The glittering material is particles having an average thickness of 0.5 to 10 µm and an average particle diameter of 5 to 50 µm, and examples thereof include metal flakes, mica, and coated glass flakes. Examples of the metal flakes include aluminum flakes and gold powder. Examples of the mica include ordinary mica and coated mica. Examples of the coated glass flakes include glass flakes coated with a metal oxide such as titanium oxide.

The printing ink can further contain known additives.

### <Inkjet Ink>

The inkjet ink contains a pigment composition and a resin, and preferably further contains a solvent. The inkjet ink can be broadly classified into a (solvent-based) inkjet ink, an aqueous inkjet ink, and a solvent-free inkjet ink, depending on the presence or absence of a solvent and the type of solvent.

Hereinafter, the aqueous inkjet ink will be mainly described.

The resin used in the aqueous inkjet ink is important for obtaining the fixability of the ink to a printing material (base material).

Examples of the type of the resin include an acrylic resin, a styrene-acrylic resin, a polyester resin, a polyamide resin, and a polyurethane resin. Examples of the form of the resin include a water-soluble resin and emulsion particles. Among these, emulsion particles are preferable. The emulsion particles include single composition particles, core-shell type particles, and the like, and can be arbitrarily selected and used. When the emulsion particles are used, it is easy to reduce the viscosity of the aqueous inkjet ink, and a recorded matter having excellent water resistance can be easily obtained. The resin can be used by neutralizing the acidic functional group with a pH adjusting agent such as ammonia, various amines, and various inorganic alkalis, if necessary.

Examples of the solvent include a water-insoluble solvent, water, and a water-soluble solvent. Examples of the water-soluble solvent include glycol ethers and diols. These solvents penetrate into a base material very quickly, and also penetrate into a low-liquid-absorbing or non-liquid-absorbing base material such as coated paper, art paper, a vinyl chloride sheet, a film, or fabric quickly. Therefore, drying at the time of printing is fast, and accurate printing can be realized. Further, since the boiling point is high, it also acts as a wetting agent.

The water-soluble solvent is important for preventing drying and solidification of the aqueous inkjet ink at a nozzle portion in a printer head and for obtaining ejection stability of the ink. Examples of the water-soluble solvent include ethylene glycol, diethylene glycol, propylene glycol, triethylene glycol, polyethylene glycol, glycerin, tetraethylene glycol, dipropylene glycol, ketone alcohol, diethylene glycol monobutyl ether, ethylene glycol monobutyl ether, ethylene glycol monoethyl ether, 1,2-hexanediol, N-methyl-2-pyrrolidone, substituted pyrrolidone, 2,4,6-hexanetriol, tetrafurfuryl alcohol, and 4-methoxy-4 methylpentanone.

The inkjet ink can further contain additives. Examples of the additives include a drying promoter, a penetrant, a preservative, a chelating agent, and a pH adjusting agent.

The inkjet ink is prepared by blending and mixing each material. Examples of the mixing include a stirrer using a blade, various dispersing machines, and an emulsifying machine. The order of addition of each material and the mixing method are arbitrary.

It is preferable that the inkjet ink is filtered or centrifuged to remove coarse particles after mixing. This improves the dischargeability from the inkjet printer. For the filtering or centrifugation, a known method can be used.

As the inkjet ink, various inkjet systems can be used. Examples of the inkjet system include a charge control type, a continuous injection type such as a spray type, a piezo system, a thermal system, and an electrostatic attraction system.

### EXAMPLES

Hereinafter, the invention will be described in more detail with reference to Examples, but the invention is not limited to these Examples. In addition, "%" in the compositions of the following Examples means "% by mass".

### (Composition Analysis)

The compositions of the dyes obtained in Examples were analyzed by FD-MS (Field Desorption-Mass Spectroscopy). Five mg of the dye was dispersed in THF and analyzed using a JMS-T100GC (manufactured by Jeol Ltd.).

### (Accelerator Mass Spectrometry (AMS Method))

A ¹⁴C-AMS dedicated device (manufactured by NEC Corporation) based on a tandem accelerator was used, and counting of ¹⁴C, measurement of ¹³C concentration (¹³C/¹²C), and ¹⁴C concentration (¹⁴C/¹²C) were performed.

In the measurement, oxalic acid (HOxII) provided by the National Institute of Standards and Technology (NIST) was used as a standard sample. Measurements of this standard sample and the background sample were also performed simultaneously. The pMC (percent Modern Carbon) is the proportion of the ¹⁴C concentration of the sample carbon to the standard modern carbon.

### (A) Synthesis of benzoic acid from 4-aminobenzoic acid

To a flask immersed in an ice bath containing 4-aminobenzoic acid (10 g) dissolved in 73 mL of 1M NaOH aqueous solution, 37% hydrochloric acid (25 g) was added dropwise . Next, 6.04 g of sodium nitrate was added and the solution mixture was stirred in an ice bath for 30 minutes. THF, 216 g, was added, and the reaction mixture was further stirred at 20°C for 3 hours. The reaction mixture was then extracted with ethyl acetate (3 × 100 mL). The organic layer was collected, dried over anhydrous MgSO₄, and filtered. The solid obtained after solvent evaporation was dried in an oven overnight to give 5.3 g of a solid.

### (B) Synthesis of benzonitrile

Benzoic acid (10 g) was mixed with 6.9 g of urea and 0.08 g of molybdenum in 50 mL of alkylbenzene. The reaction mixture was heated at 150°C for 2 hours and then raised to 250°C and held for 3 hours. After cooling to room temperature, the solid was filtered, washed thoroughly with water, and dried in an oven overnight to give 8.9 g of a solid.

### (C) Synthesis of 4-chlorobenzoic acid from 4-aminobenzoic acid

To a flask immersed in an ice bath containing 4-aminobenzoic acid (10 g) dissolved in 73 mL of 1M NaOH aqueous solution, 37% hydrochloric acid (25 g) was added dropwise. Next, 6.04 g of sodium nitrate was added and the solution mixture was stirred in an ice bath for 30 minutes. CuCl₂, 15.7 g, was added and the reaction mixture was further heated at 60°C until no evolution of nitrogen was observed. After the reaction mixture was cooled to room temperature, cold water was added and extracted with ethyl acetate (3 × 100 mL). The combined ethyl acetate was washed with brine, dried over anhydrous sodium sulfate, and filtered. The solid obtained after solvent evaporation was dried in an oven overnight to give 9.8 g of a solid.

### (D) Synthesis of 4-chlorobenzonitrile

4-Chlorobenzoic acid (10 g) was mixed with 5.4 g of urea and 0.06 g of molybdenum in 50 mL of alkylbenzene. The reaction mixture was heated at 150°C for 2 hours and then raised to 250°C and held for 3 hours. After cooling to room temperature, the solid was filtered, washed thoroughly with water, and dried in an oven overnight to give 5.8 g of a solid.

### (I) Synthesis of diisopropyl succinate

A solution of bio-derived succinic acid (10 g) in isopropyl alcohol (150 mL) and 98% H₂SO₄ (0.42 g) was stirred under reflux for 15 hours. The solvent was removed under reduced pressure. The product was dissolved in DCM (40 mL) and the organic solution was washed with water (50 mL × 3). The solution was then dried over magnesium sulfate and the solvent was evaporated to give 16.3 g of a liquid.

### (L) Synthesis of R255

Benzonitrile (10.2 g) was added to a solution of potassium tert-butoxide (11.9 g) in tert-amyl alcohol (171.6 g) under a nitrogen atmosphere. Diisopropyl succinate (10 g) was added dropwise to this mixture and the reaction mixture was then heated under reflux for 16 hours. After completion, the reaction mixture was poured into a methanol solution (167.6 g) and a concentrated hydrochloric acid solution (29.7 g). The precipitate was filtered, washed with cold methanol, and dried in an oven overnight to give 11.1 g of a solid.

As a result, a diketopyrrolopyrrole compound represented by the above (A-1) containing a radioactive carbon atom ¹⁴C could be obtained.

### (M) Synthesis of R254

4-Chlorobenzonitrile (13.6 g) was added to a solution of potassium tert-butoxide (11.9 g) in tert-amyl alcohol (171.6 g) under a nitrogen gas atmosphere. Diisopropyl succinate (10 g) was added dropwise to this mixture and the reaction mixture was then heated under reflux for 16 hours. After completion, the reaction mixture was poured into a methanol solution (167.6 g) and a concentrated hydrochloric acid solution (29.7 g). The precipitate was filtered, washed with cold methanol, and dried in an oven overnight to give 13.8 g of a solid.

As a result, a diketopyrrolopyrrole compound represented by the above (A-2) containing a radioactive carbon atom ¹⁴C and having pMC of 22% could be obtained.

When the diketopyrrolopyrrole compound represented by (A-2) was obtained in the same manner as described above except that petroleum-derived succinic acid was replaced with diisopropyl succinate in the synthesis, the radioactive carbon atom ¹⁴C was below the detection limit and could not be measured, and the pMC was 0%.

## Claims

1. A diketopyrrolopyrrole compound containing a radioactive carbon atom ¹⁴C and having a structure represented by the following formula (A): 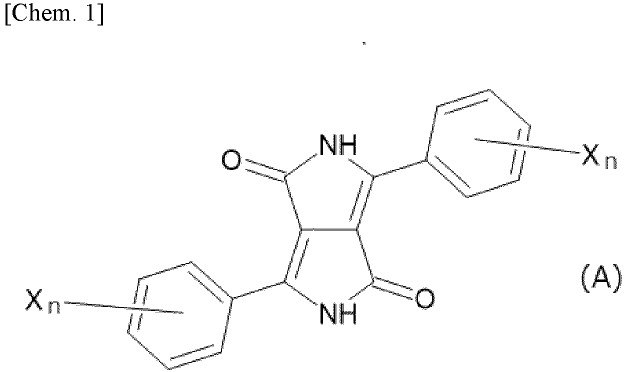 wherein X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or -CO-NR; R's each independently represent a hydrogen atom, an alkyl group, an alkenyl group, or a phenyl group; and n's each independently represent 1 or 2.

2. The diketopyrrolopyrrole compound according to claim 1, wherein the diketopyrrolopyrrole compound having a structure represented by the formula (A) is a diketopyrrolopyrrole compound represented by the following formula (A-1) or the following formula (A-2):

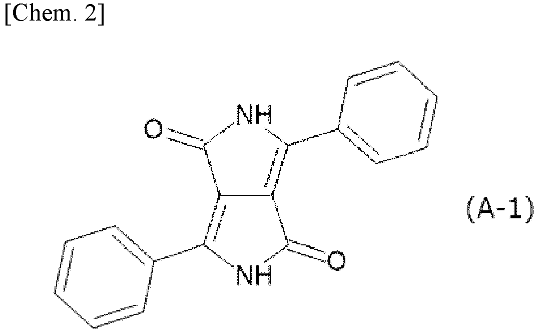

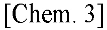

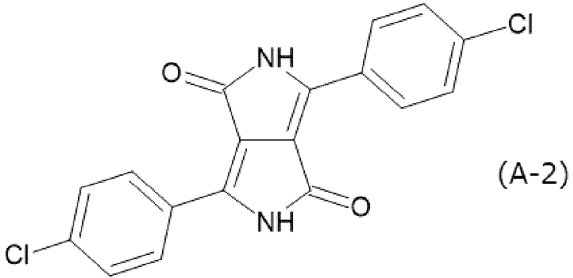

3. A composition comprising the diketopyrrolopyrrole compound according to claim 1.

4. The composition according to claim 3, wherein the composition is used as a composition for pigments.

5. The composition according to claim 3, wherein a proportion of the diketopyrrolopyrrole compound having the structure represented by (A) in the composition is 70% by mass or more.

6. A coloring composition comprising the composition according to claim 3 and a dispersion medium.

7. The coloring composition according to claim 6, wherein a proportion of the diketopyrrolopyrrole compound having the structure represented by (A) in the coloring composition is 0.5% by mass to 50% by mass.

8. A method for producing a diketopyrrolopyrrole compound containing a radioactive carbon atom ¹⁴C and having a structure represented by the following formula (A): 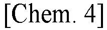 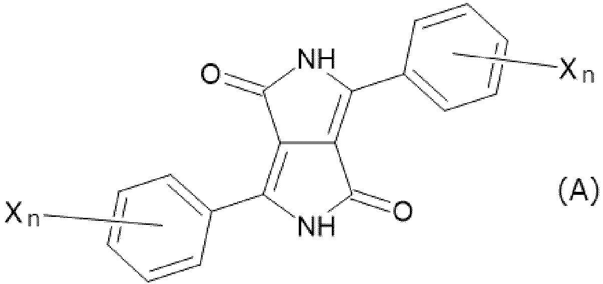 wherein X's each independently represent -Cl, -F, -Br, -I, -OH, -NO₂, a C1 to C12 alkyl group, a C1 to C12 alkoxy group, a phenyl group, -COOH, -COO-C1 to C12 alkyl, or -CO-NR; R's each independently represent a hydrogen atom, an alkyl group, an alkenyl group, or a phenyl group; and n's each independently represent 1 or 2,
the method comprising:
(A-i) using 4-aminobenzoic acid as a raw material to produce benzonitrile which may have a substituent;
(A-ii) using succinic acid as a raw material to produce diisopropylsuccinate, provided that at least one of the 4-aminobenzoic acid of (A-i) and the succinic acid of (A-ii) is bio-derived; and
(A-iii) reacting the benzonitrile which may have a substituent produced in (A-i) with the diisopropyl succinate produced in (A-ii) to produce a diketopyrrolopyrrole compound having a structure represented by the formula (A).
